# EUROPÄISCHE PATENTSCHRIFT

(11) **EP 0 264 822 B1**
(45) Veröffentlichungstag und Bekanntmachung des Hinweises auf die Patenterteilung: **05.01.1994**
(21) Anmeldenummer: 87115068.6
(22) Anmeldetag: 15.10.1987
(51) Int. Cl.: B23G 5/06

(54) **Gewindebohrer**
Tap
Taraud

(30) Priorität: 21.10.1986 DE 3635655
(43) Veröffentlichungstag der Anmeldung: 27.04.1988
(73) Patentinhaber: Wilhelm Fette GmbH, D-21493 Schwarzenbek (DE)
(72) Erfinder: Müller, Wolfgang, Dipl.-Ing., D-2053 Schwarzenbek (DE)
(74) Vertreter: Minetti, Ralf, Dipl.-Ing.

(56) Entgegenhaltungen:
- EP-A- 0 119 175
- DE-U- 8 625 416
- GB-A- 712 083
- US-A- 2 004 333
- US-A- 3 829 921
- US-A- 4 531 863
- US-A- 4 561 810

## Beschreibung

Die Erfindung betrifft einen Gewindebohrer mit einem schaftartigen Grundkörper, der an seinem Kopf über den Umfang verteilt angeordnete und sich in Nuten des Grundkörpers radial erstreckende, auswechselbare Gewindeschneideinsätze mit einem anschnitthinterschliffenen Gewindeprofil mit Hinterschneidung trägt.

Einteilige Gewindebohrer sind nur für die Herstellung einer Art von Gewinde geeignet. Sie lassen sich zwar nach einem Teilverbrauch schärfen. Derartiges ist in der Regel aber zu aufwendig, so daß sie allgemein nach einem Verschleiß durch neue Gewindebohrer ersetzt werden.

Dieser Nachteil entfällt, wenn die Gewindebohrer mit mehreren Gewindeschneideinsätzen versehen sind, die auf dem schaftartigen Grundkörper auswechselbar befestigt sind.

Nach der DE-PS 56 77 37 ist ein Gewindebohrer bekannt, der Messerleisten vorsieht, die in Nuten des Grundkörpers eingepreßt sind und in die ein Gewinde nach ihrem Einsatz in dem Grundkörper eingeschliffen wird und zwar auch in den die Messerleisten stützenden Teilen des Grundkörpers. Derartige Gewindebohrer sind demzufolge nur für ein bestimmtes Gewinde geeignet. Diese Nachteile entfallen bei einem Gewindeschneidwerkzeug nach der US-PS 3,829,921, bei dem die Schneideinsätze über den Grundkörper vorstehen. Bei derartigen Gewindeschneidwerkzeugen liegen die Schneideinsätze jedoch in parallelen Ebenen, so daß insgesamt nur zwei Scheideinsätze vorgesehen sein können. Im übrigen ist ihre Halterung problematisch, weil die Schneideinsätze nicht unmittelbar durch eine Spannschraube gehalten sind, sondern nur mittelbar durch einen von einer Schraube gehaltenen Klemmkörper, so daß der zusätzliche Einsatz eines Stützkörpers gegen eine axiale Verschiebung zum Grundkörper notwendig ist.

Bei einem weiteren bekannten Gewindebohrer mit mehreren radial ausgerichteten und über den Grundkörper vorstehenden Schneideinsätzen nach der DD-PS 132 413 von dem die Erfindung ausgeht sind für den Anschnitt und für den Vollschnitt des Gewindes gesonderte Schneideinsätze vorgesehen. Sollen mit einem solchen Gewindebohrer beispielsweise gleichzeitig vier Schneideinsätze beim Vollschnitt genutzt werden, wie es allgemein zweckmäßig ist, so sind insgesamt acht Schneideinsätze über den Umfang verteilt angeordnet vorzusehen. Derartiges ist bei größeren Bohrer mit einem erheblichen Fertigungsaufwand verbunden. An Bohrern mit geringem Durchmesser läßt sich diese Anordnung nicht verwirklichen, weil die für die Halterung notwendige Nutentiefe zu gering wäre, um die Schneideinsätze mit einfachen Mitteln auswechselbar befestigen zu können.

Aufgabe der Erfindung ist es, einen im Aufbau einfachen Gewindebohrer zu schaffen, der als Mehrzweckwerkzeug für die Herstellung verschiedenartiger Gewinde unter gleichzeitiger Ausnutzung einer hohen Anzahl von Schneidplatten geeignet ist und dessen Teilerneuerung leicht durchzuführen ist. Dafür sieht die Erfindung vor, daß die auswechselbaren Gewindeschneidplatten mit einer Bohrung für die Aufnahme einer Spannschraube versehen sind, sich axial über die kopfseite des Grundkörpers hinaus erstrecken und in Achsrichtung nach hinten verjüngt ausgebildet sind.

Ein erfindungsgemäßer Gewindebohrer kann nach einem Teilverbrauch auf sehr einfache Art und Weise mit neuen Schneidplatten bestückt werden, wobei auch Schneidplatten mit unterschiedlichen Gewindesteigungen zum Herstellen verschiedenartiger Gewinde Verwendung finden können, wie auch Schneideinsätze für die Herstellung unterschiedli cher Gewindedurchmesser. Darüber hinaus bietet ein derartiger Gewindebohrer die Möglichkeit, Messereinsätze aus unterschiedlichen Schneidstoffen wie z. B. Hartmetall oder auch aus kubisch kristallinem Bornitrid oder polykristallinen Diamant den jeweiligen Bedürfnissen der Praxis entsprechend anzuwenden. Dies kann erfolgen unter wiederholter Anwendung nur eines Grundkörpers für eine Vielzahl unterschiedlicher vorzugsweise genormter Gewindeabmessungen, wie beispielsweise Feingewinde mit einem Durchmesser von 30 bis 60 mm und Steigungen von 1 bis 3 sowie analoge Zollgewinde.

Die Anwendung von einzelnen auswechselbaren und mit einem Gewindeprofil versehenen Schneidplatten ist bei Fräsern und auch Gewindefräsen bekannt. Beim Gewindefräsen ergeben sich jedoch insoweit andere Verhältnisse, als beim Bohren eines Gewindes, da beim Gewindefräsen das Werkzeug außermittig in einer Bohrung umläuft, die größer ist als der Durchmesser des Werkzeuges. Dort wird demzufolge eine einzelne Schneide kurzzeitig, das heißt mit längeren zeitlichen Unterbrechungen, zum Eingriff mit dem Werkstück gebracht, weil sich bei der Anordnung mehrerer Schneiden jeweils lediglich eine von diesen im Eingriff mit dem Werkstück befindet, während beim Gewindebohrer nach der Erfindung die Schneidplatten alle und gleichzeitig fortlaufend im Eingriff stehen. Dazu ist zu berücksichtigen, daß sich aufgrund der unterschiedlichen Arbeitsverfahren bei einem Gewindefräser die Genauigkeit des hergestellten Gewindes im wesentlichen ergibt durch die Zustellung des Werkzeuges vermittels der Werkzeugmaschine, während sich beim Gewindebohren die Genauigkeit der Gewindebohrung ausschließlich ergibt aus der Beschaffenheit des Gewindebohrers, was naturgemäß zur Folge hat, daß bei einem Gewindebohrer wesentlich höhere Anforderungen zu stellen sind an das Werkzeug.

Dabei können sich die Schneidplatten bis in Nuten des Grunkörpers hinein erstrecken, um dadurch die Steifigkeit des Werkzeuges zu verbessern, wobei zu beachten ist, daß sich durch die zusätzliche Abstützung der Schneidplatten ihre Belastung insbesondere vermindert beim Zurückdrehen des Gewindebohrers aus einer Bohrung nach Herstellung eines Gewindes, weil dabei die Schneidplatten in umgekehrter Richtung wie beim Herstellen des Gewindes belastet werden, so daß durch die Ausnutzung der Nuten die Schrauben für die Halterung der Schneidplatten weniger belastet werden beim Zurückdrehen des Gewindebohrers.

Wesentlich verbessert bzw. verlängert wird die mögliche Einsatzdauer eines erfindungsgemäßen Werkzeuges, wenn die Schneidplatten als sogenannte Wendeplatten ausgebildet sind und dafür auf ihren beiden sich gegenüberliegenden Stirnseiten jeweils mit einem Gewindeprofil versehen sind. Dabei können die Schneidplatten an ihrer Außenseite mit einer längsverlaufenden Kehle für einen verbesserten Spanabfluß versehen sein.

Im übrigen gibt die erfindungsgemäße Lösung die Möglichkeit, Schneidplatten zu benutzen, die auch anschnitthinterschliffen sind, wobei es sich ergänzend als nützlich zeigt, wenn die Schneidplatten sich axial über die Kopfseite des Grundkörpers hinaus erstrecken, damit bei einer Nachbearbeitung des Anschnittbereiches die Schneidplatten nicht vom Grundkörper gelöst zu werden brauchen und dieser einer Bearbeitung der Schneidplatten nicht im Wege steht. Unter dieser Voraussetzung besteht weiterhin die Möglichkeit, auf der Kopfseite des Grundkörpers eine Spannplatte anzuordnen, die beim Anziehen der Spannschraube auf den Kopf der einzelnen Schneidplatten drückt und dadurch deren Halteschrauben entlastet. Die Halteschrauben für die einzelnen Schneidplatten sollten im übrigen derart geführt werden durch die Anordnung entsprechender Bohrungen, daß bei ihrem Anziehen ein Versatz der Schneidplatten in dem Sinne stattfindet, daß sie sich gegen ihre Bodenfläche wie auch Seitenfläche abstützend anpressen.

Zwei Ausführungsbeispiele der Erfindung sind nachstehend unter bezugnahme auf eine Zeichnung erläutert. In der Zeichnung zeigen:
- Figur 1:: ein Gewindebohrer mit seinen einzelnen Bestandteilen in perspektivischer Darstellung;
- Figur 2:: der Gewindebohrer von Figur 1 in der Seitenansicht;
- Figur 3:: die Draufsicht auf einen Gewindebohrer entsprechend Figur 1 und
- Figur 4:: eine Schneidplatte, die als Wendeplatte ausgebildet ist.

Der in der Zeichnung wiedergegebene Gewindebohrer besitzt einen schaftförmigen Grundkörper 1, der an seinem Kopf 2 vier Schneidplatten 3 trägt, die an ihren außenliegenden Stirnseiten jeweils mit einem Gewindeprofil 4 versehen sind. Diese Gewindeprofile 4 sind hinterschliffen, das heißt sie vermindern sich im Durchmesser in Drehrichtung gesehen. Außerdem haben die Gewindeprofile einen Hinterschliff des Anschnittes 5 in ihrem Kopfbereich, das heißt sie sind in den vorderen Gewindegängen verjüngt ausgebildet. Schließlich sind die Gewindeprofile bzw. die Schneidplatten nach hinten, das heißt auf ihrer der Kopfseite abgewandten Seite verjüngt ausgebildet, was in der Zeichnung nicht ersichtlich ist, um eine Klemmwirkung und Reibung in der Bohrung bei fortschreitender Gewindeherstellung zu vermeiden. Unter verjüngt ist deshalb zu verstehen, daß die Zahnhöhe noch vorhanden ist aber die Zähne radial zurückversetzt sind.

Für die Halterung der Schneidplatten 3 sind diese etwa mittig mit einer Bohrung 6 versehen, durch die sich jeweils eine Spannschraube 7 in eine zugehörige Gewindebohrung 8 des Grundkörpers 1 erstreckt. Die Anordnung ist dabei so getroffen, daß ein Schraubenversatz stattfindet, durch den beim Anziehen einer Spannschraube 7 die zugehörige Schneidplatte 3 in Richtung auf die Bodenfläche entsprechend Pfeil A und gegen die innenliegende Stützwand des Grundkörpers versetzt wird.

Nach ihrer Befestigung stehen die einzelnen Schneidplatten 3 mit ihren Kopfenden 13 über die Kopfseite 12 des Grundkörpers 1 bzw. Kopfes 2 axial hinaus, so daß der Anschnittbereich der Spannplatten für eine Nachbearbeitung freigegeben ist ohne die Schneidplatten vom Grundkörper lösen zu müssen. Für eine Halterung der Schneidplatten 3 trägt weiterhin eine Spannplatte 14 bei, die mittels einer Spannschraube 16 zu befestigen ist, welche sich durch die Bohrung 15 in die Gewindebohrung 17 hinein erstreckt.

Schließlich tragen zur Halterung der Schneidplatten 3 Nuten 9 bei, die mit Stützwänden 10 und 10ʹ versehen sind.

Der Spanabfluß beim Einsatz des Werkzeuges wird unterstützt durch eine im Bereich des Gewindeprofils 4 sich erstreckende längsverlaufende Kehle 11.

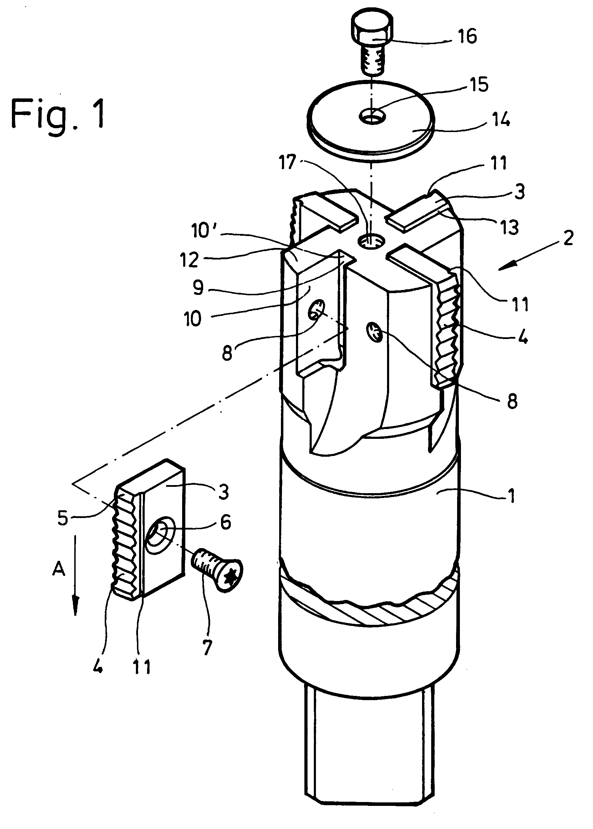

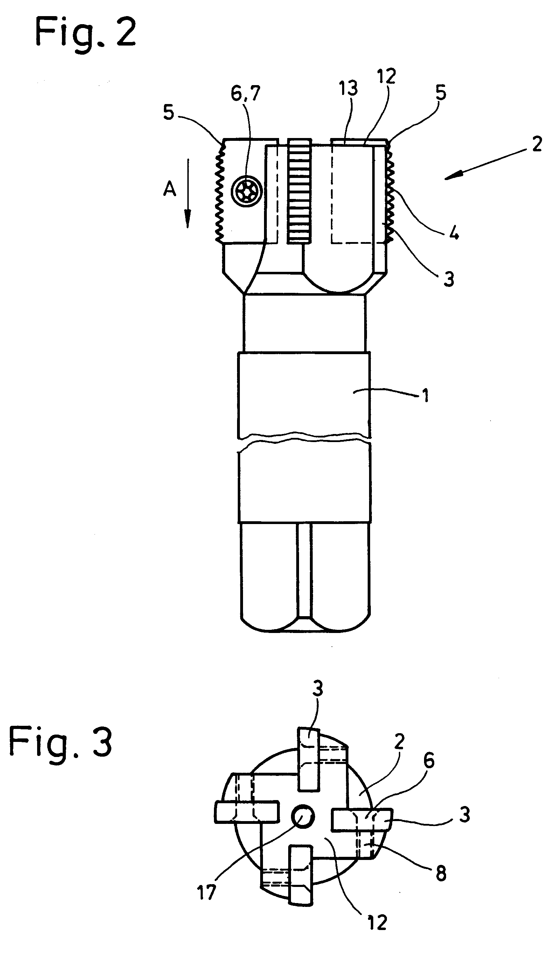

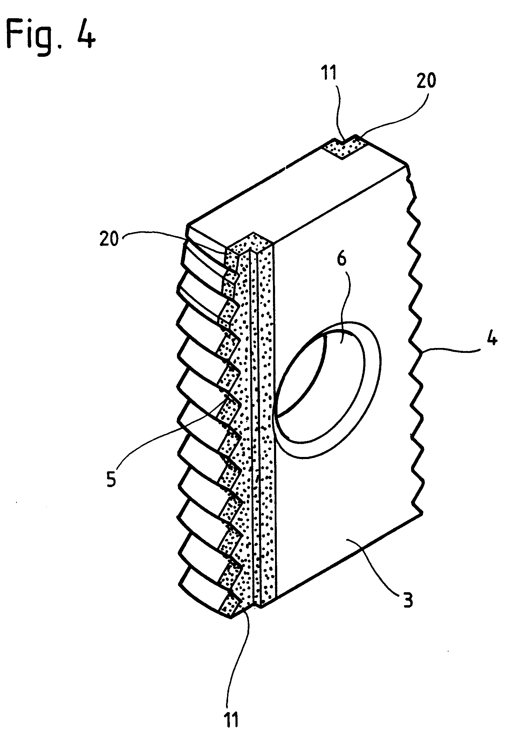

In Abweichung zu der in den Figuren 1 bis 3 wiedergegebenen Ausführungsform zeigt die Figur 4 eine Schneidplatte, die als Wendeplatte ausgebildet ist und dafür auf zwei sich gegenüberliegenden Seiten mit jeweils einem Gewindeprofil 4 versehen ist.

Dieses Gewindeprofil wird auf der Schneidseite gebildet durch Leisten 20, die aus einem härteren Material wie der Grundkörper der Schneidplatte 3 bestehen, wie insbesondere aus polykristallinem Diamant oder kubischkristallinem Bornitrid oder einem besonders hochwertigen Stahl. Diese Leisten 20 sind in Nuten des Grundkörpers 3 eingeklebt oder an diesem angelötet. Diese Anordnung hat den Vorteil, daß nicht die gesamte Schneidplatte aus dem relativ hochwertigen Material hergestellt zu werden braucht, sondern solches Material nur dort Anwendung findet, wo eine besonders hohe Belastung auftritt.

## Patentansprüche

1. Gewindebohrer mit einem schaftartigen Grundkörper (1), der an seinem Kopf (2) über den Umfang verteilt angeordnete und sich in Nuten des Grundkörpers radial erstreckende Gewindeschneidplatten (3) mit einem anschnitthinterschliffenen Gewindeprofil (4) mit Hinterschneidung trägt, dadurch gekennzeichnet, daß die auswechselbaren Gewindeschneidplatten (3) mit einer Bohrung (6) für die Aufnahme einer Spannschraube (7) versehen sind, sich axial über die Kopfseite (12) des Grundkörpers (1) hinaus erstrecken und in Achsrichtung nach hinten verjüngt ausgebildet sind.

2. Gewindebohrer nach Anspruch 1, dadurch gekennzeichnet, daß eine Schneidplatte (3) mit einer längsverlaufenden Kehle (11) als Spannut versehen ist.

3. Gewindebohrer nach Anspruch 1, dadurch gekennzeichnet, daß die Schneidplatten (3) als Wendeschneidplatten ausgebildet und an ihren beiden sich gegenüberliegenden Stirnseiten mit einem Gewindeprofil (4) versehen sind.

4. Gewindebohrer nach Anspruch 1, dadurch gekennzeichnet, daß der Grundkörper (1) mit einer durch eine Schraube (16) gehaltenen Spannplatte (14) versehen ist, die auf den Kopfseiten der Schneidplatten (3) aufliegt.

5. Gewindebohrer nach Anspruch 1, dadurch gekennzeichnet, daß die Schneidplatten (3) an den Schneidkanten eingesetzte Leisten (2) aus einem härteren Metall oder polykristallinem Diamant tragen.

## Claims

1. Tap with a rod type ground body (1) which bears on its head (2) tapping plates (3) which are placed distributed at its periphery and extending radially in grooves of the ground body with a threaded profile (4) with radial thread relief with undercut, characterized in that the replaceable tapping plates (3) are equipped with a drill hole (6) for the housing of a locking screw (7), extend axially over the head side (12) of the ground body (1) and are configured tapered rearwardly in direction of the axis.

2. Tap according to claim 1, characterized in that a tapping plate (3) is equipped with a lengthwise groove (11) as chucking groove.

3. Tap according to claim 1, characterized in that the tapping plates (3) are formed as reversible tapping plates and are equipped with a threaded profile (4) at their both opposed front sides.

4. Tap according to claim 1, characterized in that the ground body (1) is equipped with a locking plate (14), supported by a screw (16), which rests on the front sides of the tapping plates (3).

5. Tap according to claim 1, characterized in that the tapping plates (3) support on their cutting edges inserted rods (2) made of a hard metal or polycristalline diamond.

## Revendications

1. Taraud avec un corps de base de type tige (1) qui porte, sur sa tête (2) des plaques taraudeuses (3), placées en étant réparties sur sa périphérie et s'étendant radialement dans des rainures du corps de base, avec un profil fileté (4) avec détalonnage radial avec contre-dépouille, caractérisé en ce que les plaques taraudeuses remplaçables (3) sont équipées d'une forure (6) pour le logement d'une vis de serrage (7), s'étendent axialement au-delà du côté de la tête (12) du corps de base (1) et sont configurées en étant effilées vers l'arrière dans le sens de l'axe.

2. Taraud selon la revendication 1, caractérisé en ce qu'une plaque taraudeuse (3) est équipée d'une gorge dans le sens de la longueur (11) comme rainure de serrage.

3. Taraud selon la revendication 1, caractérisé en ce que les plaques taraudeuses (3) sont configurées comme des plaques réversibles et sont équipées d'un profil fileté (4) sur leurs deux faces frontales opposées.

4. Taraud selon la revendication 1, caractérisé en ce que le corps de base (1) est équipé d'une plaque de serrage (14), maintenue par une vis (16), qui repose sur les côtés face des plaques taraudeuses (3).

5. Taraud selon la revendication 1, caractérisé en ce que les plaques taraudeuses (3) portent, sur les arêtes coupantes des baguettes (2) insérées en un métal dur ou un diamant polycristallin.
